# EUROPEAN PATENT APPLICATION

(11) **EP 4 309 745 A1**
(43) Date of publication of application: **24.01.2024**
(21) Application number: 22795721.4
(22) Date of filing: 25.04.2022
(51) Int. Cl.: A62C 3/16, A62D 1/06, B05D 5/00, B05D 7/00, B05D 7/24, B32B 27/12, B32B 27/18, B32B 7/027

(54) **LAYERED PRODUCT FOR EXTINGUISHING FIRE, PRODUCTION METHOD FOR LAYERED PRODUCT FOR EXTINGUISHING FIRE, AND ELECTRONIC MEMBER**

(30) Priority: 30.04.2021 JP 2021077441; 30.04.2021 JP 2021077445; 30.04.2021 JP 2021077447
(71) Applicant: TOPPAN INC., Tokyo 110-0016 (JP); Yamato Protec Corporation, Tokyo 108-0071 (JP)
(72) Inventor: SASAKI, Satoshi, Tokyo 110-0016 (JP); KUROKAWA, Masato, Tokyo 110-0016 (JP); TANABE, Junya, Tokyo 110-0016 (JP); SHODA, Ryo, Tokyo 110-0016 (JP); TODE, Ryohei, Tokyo 110-0016 (JP); NISHIYAMA, Hiroyoshi, Tokyo 110-0016 (JP); TOMIYAMA, Shougo, Tokyo 108-0071 (JP); TSUTSUMI, Akimasa, Tokyo 108-0071 (JP)
(74) Representative: TBK
(86) International application number: PCT/JP2022/018729
(87) International publication number: WO 2022/230808

(57) **Abstract**

The present disclosure relates to a first layered product for extinguishing fire, including: a pair of substrates; and a fire-extinguishing agent-containing layer between the pair of substrates, the layer containing a fire-extinguishing agent component generating an aerosol by combustion, and a binder resin, in which a water vapor transmission rate (in a condition of 40°C/90%RH) of the substrate is 12 g/m²/day or less, a second layered product for extinguishing fire, including: a fiber layer containing an organic fiber or an inorganic fiber having a high strength-heat resistance; and a resin layer, in which at least any one of the fiber layer and the resin layer contains a fire-extinguishing agent component generating an aerosol by combustion, or a third layered product for extinguishing fire, including: a pair of substrates; and a fire-extinguishing agent-containing layer between the pair of substrates, the layer containing a fire-extinguishing agent component generating an aerosol by combustion, and a binder resin, in which a water vapor transmission rate (based on JIS K 7129, in a condition of 40°C/90%RH) of the substrate is 15 g/m²/day or less.

## Description

### Technical Field

The present invention relates to a layered product for extinguishing fire, a production method for a layered product for extinguishing fire, and an electronic member. The layered product for extinguishing fire of the present invention relates to a member preferably used together with industrial materials such as an electronic device member, a transport equipment member, and a building material, in particular, a member immediately exhibiting a fire-extinguishing function when the ignition or the combustion of the industrial material occurs to prevent the fire from spreading to the vicinity.

### Background Art

First, the background art of the first invention will be described. In the related art, a layered film containing a synthetic resin or the like was mainly used in the field of a packing material, but recently, the layered film has been used in the field of an electronic device such as a storage battery, transport equipment such as an automobile or an aircraft, a building material, or the like. For applications in such fields, the layered film is required to have flame retardance, and various products have been developed. Further, recently, there has been a high demand for a film having a fire-extinguishing function in addition to the flame retardance. For example, the storage battery used in the electronic device or the transport equipment described above is subjected to a flame retardance measure in order to handle heat generation and ignition due to heat runway when an abnormality occurs. Here, in order to further improve safety, it is required to use a member having a fire-extinguishing function of preventing in advance the fire from spreading to the vicinity.

As a molded object having such a fire-extinguishing function, for example, a self-extinguishing molded object is proposed in which a fire-extinguishing agent containing a potassium salt as a main component is contained in a binder resin, and the resin is processed into the shape of a sheet (for example, Patent Literature 1). According to such a technology, by pasting the molded object containing the fire-extinguishing agent to a target member, it is possible to suppress the spread of the fire to the vicinity when the ignition occurs due to the abnormality of the member, and safety in an emergency is ensured.

The background art of the second invention will be described. An automatic fire-extinguishing device including a bag formed from a synthetic resin film, and a fire-extinguishing agent sealed in the bag is known (for example, Patent Literature 2).

The background art of the third invention will be described. Recently, in accordance with the development of technologies, our lives have become increasingly comfortable, whereas a large amount of energy has been required to obtain the comfortability. For example, many of the electric products indispensable in daily life, such as an air conditioner, a refrigerator, and a laundromat, are connected to a plug connector for wiring (an electric outlet) and are operated by the supply of electricity. In addition, a smart phone, an electric automobile, and the like are also operated by power charged in a lithium-ion battery and the like.

However, the fire is likely to occur at a spot where the electricity flows. For example, in a switchboard, an electricity leakage or heat generation occurs due to a damage to a cable or the like, or an inflammable object such as dust is in contact with a conductive portion, which may cause ignition. In a case where the inflammable object such as dust is directly attached to the vicinity of the plug connector for wiring (the electric outlet), ignition occurs due to static electricity generated when the insertion or the removal of the electric outlet occurs, which may cause fire. Even in a power conditioner used in a power generation facility of photovoltaic power generation, heat generation occurs due to an increase in resistance caused by a construction defect or the like, or tracking occurs due to an opening and water infiltration caused by rust due to a salt damage or the like, which may cause ignition. Even in the lithium-ion battery, in a case where a short circuit occurs due to internal impurities, an impact, or the like, ignition occurs due to rapid heat generation, which may cause fire.

In Patent Literature 3, it is proposed to use a fire-extinguishing liquid and a fire extinguisher for such fire. In Patent Literature 4, it is proposed to use a fire-extinguishing composition containing an alkali metal salt such as potassium nitrate or potassium perchlorate.

### Citation List

### Patent Literature

Patent Literature 1: International Publication WO 2018/047762
Patent Literature 2: International Publication WO 2018/012503
Patent Literature 3: Japanese Unexamined Patent Publication No. H9-276440
Patent Literature 4: Japanese Unexamined Patent Publication No. H7-503159

### Summary of Invention

### Technical Problem

### (First Invention)

The properties of the molded object described in Cited Literature 1 may be changed in accordance with the surrounding environment when the molded object is stored or installed. For example, even in a case where the molded object is stored or installed in the environment of high humidity, it is desirable to suppress the degradation of the fire-extinguishing function at a high level.

The present invention (the first invention) has been made in consideration of the circumstances described above, and an object thereof is to provide a layered product for extinguishing fire, which is excellent in property stability of a fire-extinguishing agent and capable of preventing the occurrence and the spread of the fire.

### (Second Invention)

In a case where an explosion or the like occurs at fire, the device described in Cited Literature 2 does not have sufficient resistance to an impact due to the explosion.

The present invention (the second invention) has been made in consideration of the circumstances described above, and an object thereof is to provide a layered product for extinguishing fire having resistance to an impact due to an explosion or the like at fire. In addition, another object of the present invention is to provide a production method for the layered product for extinguishing fire.

### (Third Invention)

Patent Literature 3 proposes a method for coping with fire after a certain period of time has elapsed. On the other hand, it is desirable to extinguish the fire immediately after the ignition (initial fire extinguishment), from the viewpoint of minimizing a damage from the fire. In addition, since the fire-extinguishing liquid containing water as a liquid is sprayed, in a case where the fire-extinguishing liquid is sprayed to electric equipment, a short circuit, a tracking failure, the corrosion of a metal part, or the like may be caused, and portions other than a fire portion may be damaged.

In addition, in the case of using the fire-extinguishing composition as described in Patent Literature 4, when the composition contains water by a condensation due to moisture absorption or a temperature change, an expansion occurs, and it is not possible to maintain the original dimension. From the viewpoint of the initial fire extinguishment, it is preferable to use a layered product for extinguishing fire prepared by using the fire-extinguishing composition in the vicinity of a material with a high risk of ignition, such as a battery, but it is difficult to use the layered product for extinguishing fire in such a place unless the original dimension can be maintained. This is because, for example, in an electronic member in which various parts are integrated at a high density, there is a concern that the layered product for extinguishing fire expanded by the moisture absorption is in contact with other parts, resulting in defects.

The present invention (the third invention) has been made in consideration of the circumstances described above, and an object thereof is to provide a layered product for extinguishing fire capable of suppressing an expansion even in an environment containing water vapor. In addition, another object of the present invention is to provide an electronic member including the layered product for extinguishing fire.

### Solution to Problem

### (First Invention)

One aspect of the present invention relates to a layered product for extinguishing fire, including: a pair of substrates; and a fire-extinguishing agent-containing layer between the pair of substrates, the layer containing a fire-extinguishing agent component generating an aerosol by combustion, and a binder resin, in which a water vapor transmission rate (in a condition of 40°C/90%RH) of the substrate is 12 g/m²/day or less.

In one aspect, the fire-extinguishing agent component may contain a radical generator including at least one of a potassium salt and a sodium salt.

In one aspect, the fire-extinguishing agent component may contain at least an inorganic oxidizer combusting together with the binder resin to generate heat energy, and a radical generator. In addition, an initial decomposition temperature of the radical generator may be in a range of 90°C to 260°C.

In one aspect, the radical generator may be at least one of potassium acetate and tripotassium citrate.

In one aspect, at least one of the pair of substrates may include a metal oxide layer containing alumina or silica.

In one aspect, the metal oxide layer may be directed toward the fire-extinguishing agent-containing layer side.

In one aspect, the metal oxide layer may be a vapor-deposited layer of a metal oxide.

In one aspect, the layered product for extinguishing fire may further include a sealing portion sealing a lateral surface of the fire-extinguishing agent-containing layer.

### (Second Invention)

A layered product for extinguishing fire according to one aspect of the present invention, includes: a fiber layer containing an organic fiber or an inorganic fiber having a high strength - heat resistance; and a resin layer, in which at least any one of the fiber layer and the resin layer contains a fire-extinguishing agent component generating an aerosol by combustion.

By installing the layered product for extinguishing fire described above in a portion with a risk of ignition, it is possible to immediately fill the vicinity with the aerosol fire-extinguishing agent by ignition or heat generated before the ignition. In addition, even in a case where an impact of an explosion or the like occurs due to the ignition, the layered product for extinguishing fire described above is less likely to lose a fire-extinguishing function. Accordingly, it is possible to extinguish the fire in a short period of time, and to prevent the spread of the fire to the vicinity. Further, since initial fire extinguishment is available without direct human intervention at fire, the layered product for extinguishing fire described above is also excellent in terms of safety.

In one aspect, the fiber layer may contain at least one selected from the group consisting of a carbon fiber, a glass fiber, a metal fiber, and a ceramic fiber.

In one aspect, a thickness of the fiber layer may be 0.02 to 2.0 mm.

In one aspect, the resin layer may contain at least one selected from the group consisting of a urethane resin, an epoxy resin, a silicone resin, a vinyl chloride resin, a polyolefin resin, and a polyester resin.

A production method for a layered product for extinguishing fire according to one aspect of the present invention is any one of the followings.

A production method, including: a step of impregnating a fiber layer containing an organic fiber or an inorganic fiber having a high strength - heat resistance with a first liquid composition containing a liquid component, and a fire-extinguishing agent component generating an aerosol by combustion; a step of drying the impregnated first liquid composition; a step of applying a second liquid composition containing a liquid component and a resin onto the fiber layer; and a step of drying the applied second liquid composition.

A production method, including: a step of applying a third liquid composition containing a liquid component, a fire-extinguishing agent component generating an aerosol by combustion, and a resin onto a fiber layer containing an organic fiber or an inorganic fiber having a high strength - heat resistance; and a step of drying the applied third liquid composition.

A production method, including: a step of impregnating a fiber layer containing an organic fiber or an inorganic fiber having a high strength - heat resistance with a first liquid composition containing a liquid component, and a fire-extinguishing agent component generating an aerosol by combustion; a step of drying the impregnated first liquid composition; a step of applying a third liquid composition containing a liquid component, a fire-extinguishing agent component generating an aerosol by combustion, and a resin onto the fiber layer; and a step of drying the applied third liquid composition.

### (Third Invention)

A layered product for extinguishing fire according to one aspect of the present invention, includes: a pair of substrates; and a fire-extinguishing agent-containing layer between the pair of substrates, the layer containing a fire-extinguishing agent component generating an aerosol by combustion, and a binder resin, in which a water vapor transmission rate (based on JIS K 7129, in a condition of 40°C/90%RH) of the substrate is 15 g/m²/day or less.

In one aspect, the layered product for extinguishing fire may further include a sealing portion on a lateral surface of the fire-extinguishing agent-containing layer.

In one aspect, at least one of the pair of substrates may include a metal oxide layer.

In one aspect, the layered product for extinguishing fire may further include a pressure-sensitive adhesive layer on an outermost layer.

An electronic member according to one aspect of the present invention, includes: the layered product for extinguishing fire described above; and an electronic part.

### Advantageous Effects of Invention

According to the present invention (the first invention), it is possible to provide the layered product for extinguishing fire, which is excellent in the property stability of the fire-extinguishing agent and is capable of preventing the occurrence and the spread of the fire.

According to the present invention (the second invention), it is possible to provide the layered product for extinguishing fire having resistance to the impact due to the explosion or the like at fire. In addition, according to the present invention, it is possible to provide the production method for the layered product for extinguishing fire described above.

According to the present invention (the second invention), the layered product for extinguishing fire, which is capable of maintaining the shape even when the impact occurs due to the explosion or the like at fire, is capable of being easily installed in a portion with a concern for ignition, and exhibits an effect excellent in the initial fire extinguishment when the ignition occurs, is provided. Such a layered product for extinguishing fire can be preferably used as an industrial material such as a building material, an automobile member, an aircraft member, and an electronic member.

According to the present invention (the third invention), it is possible to provide the layered product for extinguishing fire capable of suppressing the expansion even in the environment containing the water vapor. In addition, the present invention is capable of providing the electronic member including the layered product for extinguishing fire.

The expansion of the fire-extinguishing agent-containing layer is caused by the moisture absorption. According to the present invention (the third invention), it is possible to suppress the burst of the layered product for extinguishing fire due to the expansion, a water leakage due to the burst (the scattering of the absorbed moisture), a short circuit of the electronic member due to the water leakage, and the like.

The advantages of the present invention (the first invention to the third invention) will be concisely summarized below.
· A damage due to the spread of a flame can be minimized. That is, the initial fire extinguishment is available.
· There is no need for a person to carry a fire extinguisher into the vicinity of a fire-extinguishing target and extinguish the fire, after checking the occurrence of the fire.
· Since the layered product for extinguishing fire can be simply installed, compared to a facility such as an automatic fire-extinguishing device, there are few restrictions on an installation location, and it is possible to apply the layered product for extinguishing fire, in accordance with a required spot.
· Since the layered product for extinguishing fire is excellent in the property stability of the fire-extinguishing agent, it is possible to reduce a replacement frequency of the layered product for extinguishing fire.

### Brief Description of Drawings

FIG. 1 is a schematic sectional view of a layered product for extinguishing fire according to a first embodiment.
FIG. 2 is a schematic sectional view of another layered product for extinguishing fire according to the first embodiment.
FIG. 3 is a schematic sectional view of a layered product for extinguishing fire according to a second embodiment.
FIG. 4 is a schematic sectional view of a layered product for extinguishing fire according to a third embodiment.
FIG. 5 is a schematic sectional view of another layered product for extinguishing fire according to the third embodiment.
FIG. 6 is a schematic sectional view of another layered product for extinguishing fire according to the third embodiment.

### Description of Embodiments

Hereinafter, embodiments of the present invention will be described in detail. However, the present invention is not limited to the following embodiments.

### ∼First Embodiment∼

### <Layered Product for Extinguishing Fire>

A layered product for extinguishing fire includes a pair of substrates, and a fire-extinguishing agent-containing layer between the pair of substrates, the layer containing a fire-extinguishing agent component generating an aerosol by combustion, and a binder resin. The pair of substrates having a water vapor transmission rate (in the condition of 40°C/90%RH) of 12 g/m²/day or less can be referred to as a barrier substrate (a substrate having water vapor barrier properties). The layered product for extinguishing fire may be in the shape of a sheet. Since the fire-extinguishing agent-containing layer is interposed between the pair of substrates, shape stability or a strength is excellent, compared to a case where the fire-extinguishing agent-containing layer is used as a single layer (a case where the fire-extinguishing agent-containing layer is simply used as a molded object).

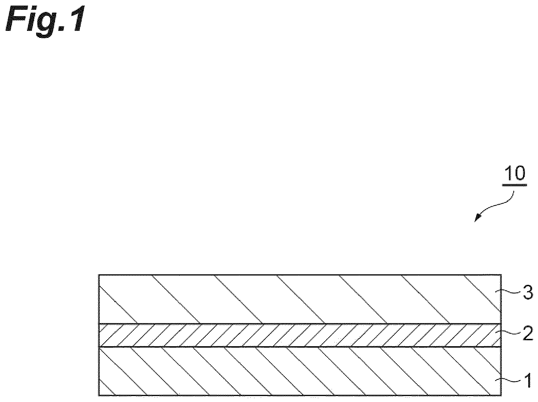

FIG. 1 is a schematic sectional view of a layered product for extinguishing fire according to a first embodiment. A layered product 10 for extinguishing fire includes a substrate 1, a fire-extinguishing agent-containing layer 2, and a substrate 3, in this order. The substrates 1 and 3 can be referred to as a barrier substrate in the layered product 10 for extinguishing fire. As illustrated in FIG. 1, the fire-extinguishing agent-containing layer 2 may be provided on the entire surface between the substrate 1 and the substrate 3. That is, the end surfaces of the substrate 1, the fire-extinguishing agent-containing layer 2, and the substrate 3 may be flush with each other. The fire-extinguishing agent-containing layer 2 may be provided in a part between the substrate 1 and the substrate 3. For example, in a case where the fire-extinguishing agent-containing layer 2 is provided in the center portion between the substrate 1 and the substrate 3, the lateral surface of the fire-extinguishing agent-containing layer 2 is easily protected from external factors.

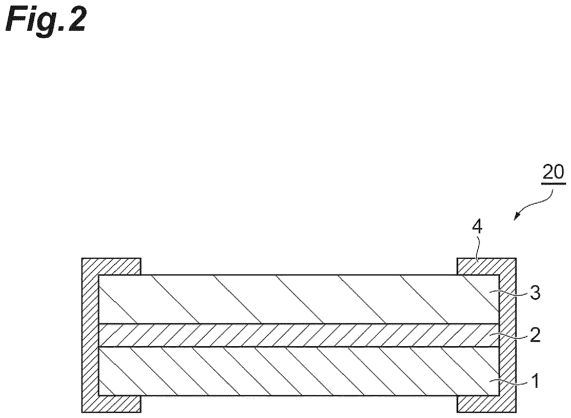

FIG. 2 is a schematic sectional view of another layered product for extinguishing fire according to the first embodiment. A layered product 20 for extinguishing fire includes a substrate 1, a fire-extinguishing agent-containing layer 2, and a substrate 3, in this order, and includes a sealing portion 4 sealing the lateral surface of the fire-extinguishing agent-containing layer 2.

Since the thickness of the layered product for extinguishing fire varies in accordance with a layer configuration, it is not necessary to limit the thickness, and for example, the thickness can be 0.1 to 20 mm, from the viewpoint of thinning the layered product for extinguishing fire such that an installation space is not limited while maintaining property stability.

The area of the main surface (a surface when the layered product for extinguishing fire is seen from the top in a vertical direction) of the layered product for extinguishing fire, for example, can be 9 to 620 cm², from the viewpoint of fire-extinguishing performance and handleability.

The layered product for extinguishing fire is provided in advance on a target with a concern for ignition or in the vicinity of the target. In a case where the ignition occurs from the target, initial fire extinguishment is performed by the layered product for extinguishing fire.

### (Substrate)

As the pair of substrates having water vapor barrier properties, a resin substrate or a metal substrate can be selected. Examples of the resin substrate include polyolefin (such as LLDPE, PP, COP, and CPP), polyester (such as PET), a fluorine resin (such as PTFE, ETFE, EFEP, PFA, FEP, and PCTFE), PVC, PVA, an acrylic resin, an epoxy resin, polyamide, and polyimide, from the viewpoint of having a desired water vapor transmission rate and easily suppressing a deterioration in the fire-extinguishing agent. Examples of the metal substrate include a metal such as aluminum and stainless steel. By selecting a material with transparency, it is easy to check the appearance of the layered product for extinguishing fire or a time for replacement.

The water vapor transmission rate (in the condition of 40°C/90%RH) required for the substrate is 12 g/m²/day or less, in consideration of the property stability of the fire-extinguishing agent component generating the aerosol by the combustion, and may be 10 g/m²/day or less, may be 5 g/m²/day or less, or may be 1 g/m²/day or less. The lower limit of the water vapor transmission rate is not particularly limited, and for example, can be 1 × 10⁻⁶ g/m²/day in the case of the metal substrate, and can be 0.1 g/m²/day in the case of the resin substrate. The water vapor transmission rate of the substrate can be adjusted in accordance with a change in the thickness, a change in the molecular weight, a surface treatment, the formation of a metal oxide layer described below, and the like. In a case where the water vapor barrier properties are insufficient, there is a concern that the degradation of the function of the fire-extinguishing agent component, the expansion of the layered product for extinguishing fire, and the modification of the substrate, and the like occur due to the deliquescence of the fire-extinguishing agent component. The water vapor transmission rate (in the condition of 40°C/90%RH) is measured in accordance with JIS Z 0208:1976 Cup Method/JIS K 7129B MOCON Method/ISO 15106-5 DELTAPERM.

The thickness of the substrate can be suitably selected in accordance with heat quantity and an impact when fire breaks out, an allowable space, and the like. For example, in the case of a thick substrate, water vapor transmission is easily suppressed, a strength or rigidity is obtained, a form with high flatness can be obtained, and handling is facilitated. In addition, in the case of a thin substrate, it is possible to provide the layered product for extinguishing fire in a narrow space. The thickness of the substrate, for example, can be 5 to 200 µm, and may be 10 to 100 µm, may be 10 to 50 µm, or may be 12 to 20 µm. The thicknesses of the pair of substrates having water vapor barrier properties may be identical to each other or different from each other.

At least one of the substrates may include a metal oxide layer, from the viewpoint of adjusting the water vapor transmission rate. That is, as at least one of the substrates, a substrate including the metal oxide layer on the surface may be used. The metal oxide layer may be formed on one surface of the substrate, or may be formed on both surfaces. In a case where the metal oxide layer is formed on one surface of the substrate, the metal oxide layer may be directed toward the fire-extinguishing agent-containing layer side, from the viewpoint of protecting the metal oxide layer and suppressing a deterioration in the water vapor barrier properties from the external factors.

Examples of the metal oxide include alumina or silica. Examples of the metal oxide layer include a vapor-deposited layer of a metal oxide (an alumina vapor-deposited layer or a silica vapor-deposited layer). It is possible to preferably use the silica vapor-deposited layer, from the viewpoint of corrosion resistance to alkaline water generated by the deliquescence of the fire-extinguishing agent component. The thickness of the metal oxide layer can be 3 to 100 nm, from the viewpoint of the water vapor barrier properties and the cost.

### (Fire-Extinguishing Agent-Containing Layer)

The fire-extinguishing agent-containing layer is a layer containing the fire-extinguishing agent component and the binder resin. The fire-extinguishing agent component generates the aerosol by the combustion. The fire-extinguishing agent component, for example, contains at least an inorganic oxidizer and a radical generator. The radical generator has a function of stabilizing combustion radicals to suppress a combustion chain reaction (a negative catalyst function). The fire-extinguishing agent component has deliquescence.

The thickness of the fire-extinguishing agent-containing layer may be suitably set in accordance with an installation location of the layered product for extinguishing fire, and the amount of fire-extinguishing agent component to be blended. It is sufficient that the thickness of the fire-extinguishing agent-containing layer, for example, is 1 mm or less, and the thickness can be 30 to 1000 µm, and may be 150 to 500 µm.

The content rate of the fire-extinguishing agent component of the fire-extinguishing agent-containing layer (based on the mass of the fire-extinguishing agent-containing layer), for example, is 50 to 97% by mass, and is preferably 60 to 95% by mass, and more preferably 70 to 92% by mass. By setting the content rate of the fire-extinguishing agent component to 50% by mass or more, it is possible to attain excellent fire-extinguishing performance, whereas by setting the content rate to 97% by mass or less, it is possible to attain excellent moldability. The amount of fire-extinguishing agent component per unit area may be set in accordance with a target to be extinguished. For example, it is sufficient that the amount is 25 g/m² or more with respect to low heating power such as a candle. It is sufficient that the amount is 90 g/m² or more with respect to the heating power of 1 g of solid fuel. It is preferable that the amount is 100 g/m² or more with respect to high heating power such as large-scale fire or ignition from a lithium-ion battery.

### [Fire-Extinguishing Agent Component]

As described above, the fire-extinguishing agent-containing layer contains the inorganic oxidizer and the radical generator as the fire-extinguishing agent component. Hereinafter, such components will be described.

The inorganic oxidizer (hereinafter, referred to as a "component (A)", in some cases) is a component combusting together with the binder resin to generate heat energy. Examples of the inorganic oxidizer include potassium chlorate, sodium chlorate, strontium chlorate, ammonium chlorate, magnesium chlorate, and potassium perchlorate. Among them, one type of the inorganic oxidizers may be used alone, or two or more types thereof may be used together.

The radical generator (hereinafter, referred to as a "component (B)", in some cases) is a component for generating an aerosol (radicals) by heat energy generated by the combustion of the binder resin and the inorganic oxidizer. It is preferable to use a radical generator having an initial decomposition temperature in a range of 90°C to 260°C, as the radical generator. Examples of the radical generator include a potassium salt and a sodium salt. Examples of the potassium salt include potassium acetate, potassium propionate, monopotassium citrate, dipotassium citrate, tripotassium citrate, monopotassium trihydrogen ethylene diamine tetraacetate, dipotassium dihydrogen ethylene diamine tetraacetate, tripotassium monohydrogen ethylene diamine tetraacetate, tetrapotassium ethylene diamine tetraacetate, potassium hydrogen phthalate, dipotassium phthalate, potassium hydrogen oxalate, dipotassium oxalate, and potassium bicarbonate. Examples of the sodium salt include sodium acetate, sodium citrate, and sodium bicarbonate. Among them, one type of the radical generators may be used alone, or two or more types thereof may be used together.

The content of the component (A), for example, is 10 to 60 parts by mass, preferably 20 to 50 parts by mass, and more preferably 35 to 45 parts by mass, with respect to the total amount of 100 parts by mass of the component (A) and the component (B). The content of the component (B), for example, is 40 to 90 parts by mass, preferably 50 to 80 parts by mass, and more preferably 55 to 65 parts by mass, with respect to the total amount of 100 parts by mass of the component (A) and the component (B).

As the fire-extinguishing agent component to be blended in the fire-extinguishing agent-containing layer, a commercially available product may be used. Examples of the commercially available fire-extinguishing agent component include K-1 (Product Name, manufactured by YAMATO PROTEC CORPORATION) and STAT-X (Product Name, manufactured by Nippon Koki Co., Ltd.).

### [Binder Resin]

As the binder resin, a thermoplastic resin and a thermosetting resin can be used. Examples of the thermoplastic resin include a polyolefin-based resin such as a polypropylene-based resin, a polyethylene-based resin, a poly(1-)butene-based resin, and a polypentene-based resin, a polystyrene-based resin, an acrylonitrile-butadiene-styrene-based resin, a methyl methacrylate-butadiene-styrene resin, an ethylene-vinyl acetate resin, an ethylene-propylene resin, a polycarbonate-based resin, a polyphenylene ether-based resin, an acrylic resin, a polyamide-based resin, and a polyvinyl chloride-based resin. Examples of the thermosetting resin include rubbers such as natural rubber (NR), isoprene rubber (IR), butadiene rubber (BR), 1,2-polybutadiene rubber (1,2-BR), styrene-butadiene rubber (SBR), chloroprene rubber (CR), nitrile rubber (NBR), butyl rubber (IIR), ethylene-propylene rubber (EPR and EPDM), chlorosulfonated polyethylene (CSM), acrylic rubber (ACM and ANM), epichlorohydrin rubber (CO and ECO), poly-vulcanized rubber (T), silicone rubber (Q), fluorine rubber (FKM and FZ), and urethane rubber (U), a polyurethane resin, a polyisocyanate resin, a polyisocyanurate resin, a phenolic resin, and an epoxy resin. The binder resin may contain a curing agent component.

The epoxy resin is suitable for the binder resin, from the viewpoint of being excellent in compatibility with the fire-extinguishing agent component, being soluble in an alcohol solvent described below, and having high stability. Since the epoxy resin is excellent in the compatibility with the potassium salt and the sodium salt (the radical generator), it is easy to obtain the fire-extinguishing agent-containing layer with an even thickness. In addition, since the epoxy resin does not cause hydrolysis and embrittlement due to moist heat, the fire-extinguishing agent-containing layer containing the epoxy resin as the binder resin has excellent stability. In addition, when the combustion of the fire-extinguishing agent-containing layer occurs, heat decomposition starts at approximately 260°C to 350°C, and it is possible to generate the aerosol without impairing the fire-extinguishing performance.

It is preferable to use a binder resin having water vapor barrier properties, as the binder resin. Examples of a commercially available product of such a binder resin include MAXIVE (Product Name, manufactured by MITSUBISHI GAS CHEMICAL COMPANY, INC.), which is an epoxy resin. The epoxy resin, for example, can be used together with an amine-based curing agent.

The content rate of the binder resin, which is based on the total amount of fire-extinguishing agent-containing layer, for example, is 3 to 50% by mass, preferably 5 to 40% by mass, and more preferably 8 to 30% by mass. By setting the content rate of the binder resin to 3% by mass or more, it is possible to attain excellent moldability, whereas by setting the content rate to 50% by mass or less, it is possible to attain excellent fire-extinguishing performance.

### [Other Components]

Examples of other components to be blended in the fire-extinguishing agent-containing layer include a dispersant, a solvent, a colorant, an antioxidant, a flame retardant, an inorganic filler, and a pressure-sensitive adhesive agent. Such components may be suitably selected in accordance with the composition of the fire-extinguishing agent-containing layer, and the type of binder resin. The content rate of the other components in the fire-extinguishing agent-containing layer (based on the mass of the fire-extinguishing agent-containing layer), for example, is 10% by mass or less.

### (Sealing Portion)

The layered product for extinguishing fire may further include the sealing portion sealing the lateral surface of the fire-extinguishing agent-containing layer. By providing the sealing portion in the layered product for extinguishing fire, the fire-extinguishing agent component is not in contact with the air, and it is possible to further suppress the degradation of the function of the fire-extinguishing agent component.

The sealing portion can be formed by using a film or a tape with a sufficiently low water vapor transmission rate (for example, 12 g/m²/day or less). For example, in FIG. 2, the lateral surface of the layered product for extinguishing fire including the lateral surface of the fire-extinguishing agent-containing layer is sealed with a sealing tape as the sealing portion 4. In the same drawing, the sealing tape is applied to wrap around a part of the surface of the substrate 1 and the substrate 3 such that the lateral surface can be more rigidly sealed, but the sealing tape may be applied only to the lateral surface. Examples of the sealing film and the sealing tape include a resin film and a metal film containing a pressure-sensitive adhesive agent (a bonding adhesive agent).

### (Fire-Extinguishing Target)

A fire-extinguishing target is not particularly limited insofar as the target has a concern for ignition. Examples of the target with a concern for ignition include an electric wire, a switchboard, a distribution board, a control panel, an storage battery (such as a lithium-ion battery), a building material such as wall paper for a building material and a ceiling material, a box for collecting a lithium-ion battery (a recycle box), a trash can, an automobile-related member, and each member such as an electric outlet and an electric outlet cover. The layered product for extinguishing fire may be used by being pasted to the fire-extinguishing target with a bonding adhesive agent or a pressure-sensitive adhesive agent. In a case where the surface of the fire-extinguishing target to be pasted with the layered product for extinguishing fire is a metal such as an aluminum foil or an iron plate, an inorganic substance such as glass, and the like, which has an extremely low water vapor transmission rate, the properties of the fire-extinguishing agent-containing layer are more easily stabilized.

### <Production Method for Layered Product for Extinguishing Fire>

A production method for the layered product for extinguishing fire is not particularly limited, and the layered product for extinguishing fire can be produced by suitably layering each layer described above.

A method for forming the fire-extinguishing agent-containing layer 2 onto the substrate 1, for example, may include a step of preparing a coating liquid containing the fire-extinguishing agent component described above and the binder resin described above (a coating liquid preparing step), a step of forming a coated film on the surface of the substrate 1 by using the coating liquid (an applying step), and a step of forming the fire-extinguishing agent-containing layer 2 on the surface of the substrate 1 by drying the coated film (a drying step).

In the coating liquid preparing step, an alcohol solvent (for example, ethanol and IPA) can be used as a solvent used in the preparation of the coating liquid. Since the alcohol solvent is excellent in the dispersibility of the fire-extinguishing agent component and has low volatility, the alcohol solvent is suitable for the solvent for preparing the coating liquid. As the solvent, ethyl acetate may be used. An amount ratio of the solvent to the amount of fire-extinguishing agent component and binder resin may be suitably adjusted in accordance with a desired viscosity of the coating liquid.

The applying step may be implemented by wet coating, or may be implemented by impregnating the substrate with the coating liquid.

The drying step, for example, can be implemented by heating the coated film to 50°C to 100°C, from the viewpoint of suppressing the reaction of the fire-extinguishing agent component while sufficiently removing the solvent.

In addition, after each of the substrate and the fire-extinguishing agent-containing layer is prepared, the layered product for extinguishing fire, for example, can be produced by a laminating and bonding method, a method for performing co-extrusion molding with respect to the substrate and the fire-extinguishing agent-containing layer, and the like. The layered product for extinguishing fire can be produced by a method suitable for the material used.

### ∼Second Embodiment∼

### <Layered Product for Extinguishing Fire>

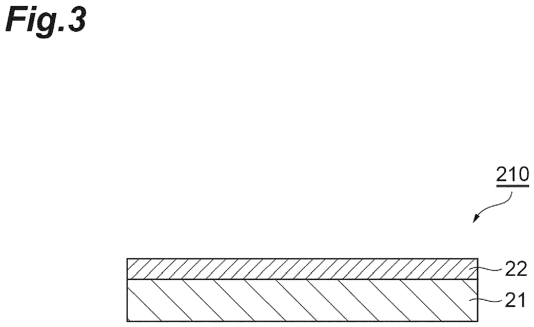

A layered product for extinguishing fire includes a fiber layer and a resin layer. At least any one of the fiber layer and the resin layer contains a fire-extinguishing agent component generating an aerosol by combustion. FIG. 3 is a schematic sectional view of a layered product for extinguishing fire according to a second embodiment. A layered product 210 for extinguishing fire includes a fiber layer 21, and a resin layer 22, in this order.

Since the thickness of the layered product for extinguishing fire varies in accordance with a layer configuration, it is not necessary to limit the thickness, and for example, the thickness can be 0.1 to 20 mm, from the viewpoint of thinning the layered product for extinguishing fire such that an installation space is not limited while maintaining fire-extinguishing performance and impact resistance.

The area of the main surface (a surface when the layered product for extinguishing fire is seen from the top in a vertical direction) of the layered product for extinguishing fire, for example, can be 1 to 1500 cm², from the viewpoint of the fire-extinguishing performance, the impact resistance, and handleability.

### (Fiber Layer)

The fiber layer contains an organic fiber or an inorganic fiber having a high strength - heat resistance, and specifically contains at least any one of the organic fiber and the inorganic fiber. Examples of the organic fiber include a carbon fiber. Examples of the inorganic fiber include a glass fiber, a metal fiber (for example, a stainless steel fiber and an aluminum fiber), and a ceramic fiber. Such fibers have a high strength - heat resistance. The fiber layer may be a fiber sheet in which the fibers aligned in one direction are fixed with a resin, or may be a woven fabric of the fibers, a knitted fabric of the fibers, and the like. Since the fiber layer is a layer containing the fibers (in particular, the woven fabric or the knitted fabric), the fiber layer easily carries a sufficient amount of fire-extinguishing agent component, has light weight, is less likely to be modified by heat or an impact when the ignition occurs, and easily maintains a strength. Accordingly, it is possible to further ensure safety. The fiber layer may include a plurality of layers containing different fibers.

The fiber layer is a substrate having a high strength - heat resistance, which can be resistant to heat or an impact due to fire. Therefore, the fiber layer can be referred to as a substrate with a high strength - heat resistance. The substrate with a high strength - heat resistance has at least a tensile strength and a heat resistance temperature described below.

The tensile strength of the fiber layer, which is measured on the basis of JIS-R-3420, can be 5 × 10³ N/25 mm or more, and may be 50 × 10³ N/25 mm or more. The upper limit of the tensile strength is not particularly limited, and can be 1 × 10⁶ N/25 mm or less. In a case where there are a flow direction MD and a perpendicular direction TD in the fiber layer, the tensile strength can be the average in both directions.

The elastic modulus of the fiber layer, which is measured on the basis of JIS-R-3414, can be 3 GPa or more, and may be 10 GPa or more, or may be 50 GPa or more. The upper limit of the elastic modulus is not particularly limited, and can be 300 GPa or less. In a case where there are the flow direction MD and the perpendicular direction TD in the fiber layer, the elastic modulus can be the average in both directions.

The heat resistance temperature of the fiber layer, which is measured on the basis of ISO 15025, can be 300°C or higher, and may be 700°C or higher, or may be 1300°C or higher. The upper limit of the heat resistance temperature is not particularly limited, and can be 1400°C or lower.

The thickness of the fiber layer can be 0.02 to 2.0 mm, and may be 0.4 to 1.0 mm, from the viewpoint of the tensile strength, bendability, the installation space, the cost, and the like.

In a case where the fiber layer contains the fire-extinguishing agent component generating the aerosol by the combustion, the amount of fire-extinguishing agent component can be 10 to 80% by mass, and may be 20 to 70% by mass, with respect to the total amount of fiber layer, from the viewpoint of fire-extinguishing capability and the retention of the fire-extinguishing agent.

### (Resin Layer)

The resin layer is a layer imparting various functions to the layered product for extinguishing fire, and can be referred to as a function layer. Examples of the function layer include an abrasion-resistant layer (a hard coat layer), an anti-fouling layer, a water-repelling layer, a decorative layer, an ultraviolet absorbing layer, and a heat transfer layer. Which function is imparted to the layered product for extinguishing fire can be adjusted in accordance with the resin used. The resin layer may have a plurality of these configurations.

Examples of the resin configuring the resin layer include a urethane resin, an epoxy resin, a silicone resin, a vinyl chloride resin, a polyolefin resin (polyethylene or polypropylene), and a polyester resin. Such resins exhibit a predetermined function while being stably fixed in the function layer at normal times, and are likely to actively supply heat energy to the fire-extinguishing agent component when an abnormality such as fire occurs. In a case where the resin layer contains the fire-extinguishing agent component generating the aerosol by the combustion, such resins (in particular, the epoxy resin) have excellent compatibility with the fire-extinguishing agent component, and may function as a binder of the fire-extinguishing agent component.

The thickness of the resin layer can be 0.050 to 1 mm, and may be 0.1 to 0.3 mm, from the viewpoint of the fire-extinguishing function, the bendability, the installation space, the cost, and the like.

In a case where the resin layer contains the fire-extinguishing agent component generating the aerosol by the combustion, the amount of fire-extinguishing agent component can be 60 to 97% by mass, and may be 70 to 93% by mass, with respect to the total amount of resin layer, from the viewpoint of the fire-extinguishing capability and coatability.

The resin layer may contain a dispersant, a colorant, an antioxidant, a flame retardant, an inorganic filler, a pressure-sensitive adhesive agent, and the like, as other components. The content of the other components in the resin layer can be 20 parts by mass or less with respect to the total amount of 100 parts by mass of the resin layer.

### (Fire-Extinguishing Agent Component)

The fire-extinguishing agent component generates the aerosol by the combustion. The fire-extinguishing agent component, for example, contains at least an inorganic oxidizer and a radical generator. The radical generator has a function of stabilizing combustion radicals to suppress a combustion chain reaction (a negative catalyst function).

The inorganic oxidizer (a component (A)) is a component generating heat energy by combustion. A specific aspect of the inorganic oxidizer is as described above.

The radical generator (a component (B)) is a component for generating an aerosol (radicals) by heat energy generated by the combustion of the inorganic oxidizer. A specific aspect of the radical generator is as described above.

The content of the component (A) and the content of the component (B) are as described above.

As the fire-extinguishing agent component, a commercially available product may be used. A commercially available fire-extinguishing agent component is as described above.

The fire-extinguishing agent component can be used together with the binder resin. A specific aspect of the binder resin is as described above.

The amount of binder resin can be 5 to 40 parts by mass, and may be 10 to 30 parts by mass, with respect to the total amount of 100 parts by mass of the fire-extinguishing agent component, from the viewpoint of fixing the fire-extinguishing agent component or exhibiting excellent fire-extinguishing performance.

### (Bonding Adhesive Layer)

The layered product for extinguishing fire may further include a bonding adhesive layer between the fiber layer and the resin layer. The bonding adhesive layer, for example, can be formed by using a bonding adhesive agent such as an epoxy resin, an acrylic resin, and a urethane resin. The thickness of the bonding adhesive layer, for example, can be 1 to 10 µm, and may be 2 to 5 µm.

### <Production Method for Layered Product for Extinguishing Fire>

The layered product for extinguishing fire, for example, can be produced by the following production methods of (1) to (3).
(1) A production method including a step of impregnating a fiber layer containing an organic fiber or an inorganic fiber having a high strength - heat resistance with a first liquid composition containing a liquid component, and a fire-extinguishing agent component generating an aerosol by combustion, a step of drying the impregnated first liquid composition, a step of applying a second liquid composition containing a liquid component and a resin onto the fiber layer, and a step of drying the applied second liquid composition.
(2) A production method including a step of applying a third liquid composition containing a liquid component, a fire-extinguishing agent component generating an aerosol by combustion, and a resin onto a fiber layer containing an organic fiber or an inorganic fiber having a high strength - heat resistance, and a step of drying the applied third liquid composition.
(3) A production method for a layered product for extinguishing fire including a step of impregnating a fiber layer containing an organic fiber or an inorganic fiber having a high strength - heat resistance with a first liquid composition containing a liquid component, and a fire-extinguishing agent component generating an aerosol by combustion, a step of drying the impregnated first liquid composition, a step of applying a third liquid composition containing a liquid component, a fire-extinguishing agent component generating an aerosol by combustion, and a resin onto the fiber layer, and a step of drying the applied third liquid composition.

According to (1) described above, it is possible to obtain the layered product for extinguishing fire including the fiber layer containing the fire-extinguishing agent component, and the resin layer. According to (2), it is possible to obtain the layered product for extinguishing fire including the fiber layer, and the resin layer containing the fire-extinguishing agent component. According to (3), it is possible to obtain the layered product for extinguishing fire including the fiber layer containing the fire-extinguishing agent component, and the resin layer containing the fire-extinguishing agent component. According to such methods, it is possible to produce the layered product for extinguishing fire in quantity at a low cost.

Examples of the liquid component used in the preparation of each liquid composition include an alcohol solvent (for example, ethanol and IPA). Since the alcohol solvent is excellent in the dispersibility of the fire-extinguishing agent component and has low volatility, the alcohol solvent is suitable for the solvent for preparing the liquid composition. An amount ratio of the liquid component to the amount of fire-extinguishing agent component and resin (binder resin) may be suitably adjusted such that a desired liquid composition viscosity can be obtained.

The liquid composition can be used for the impregnation or the application as described above. The application can be performed by any suitable method. The application, for example, can be performed by a wet film formation method such as a gravure coater, a dip coater, a reverse coater, a wire bar coater, and a die coater.

The liquid composition, for example, can be dried by heating the liquid composition at 50°C to 100°C, from the viewpoint of suppressing the reaction of the fire-extinguishing agent component while sufficiently removing the liquid component.

Examples of other production methods include a method for preparing a fiber layer containing a fire-extinguishing agent component and a resin layer, a fiber layer and a resin layer containing a fire-extinguishing agent component, or a fiber layer containing a fire-extinguishing agent component and a resin layer containing a fire-extinguishing agent component, respectively, and layering both of the layers via a bonding adhesive layer.

### ~Third Embodiment~

### <Layered Product for Extinguishing Fire>

A layered product for extinguishing fire includes a pair of substrates, and a fire-extinguishing agent-containing layer between the pair of substrates, the layer containing a fire-extinguishing agent component generating an aerosol by combustion, and a binder resin. The pair of substrates having a water vapor transmission rate (based on JIS K 7129, in the condition of 40°C/90%RH) of 15 g/m²/day or less can be referred to as a barrier substrate (a substrate having water vapor barrier properties). The layered product for extinguishing fire may be in the shape of a sheet.

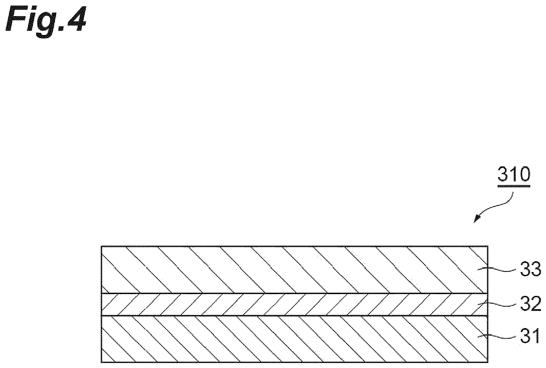

FIG. 4 is a schematic sectional view of a layered product for extinguishing fire according to a third embodiment. A layered product 310 for extinguishing fire includes a substrate 31, a fire-extinguishing agent-containing layer 32, and a substrate 33, in this order. The substrates 31 and 33 can be referred to as a barrier substrate in the layered product 310 for extinguishing fire. As illustrated in FIG. 4, the fire-extinguishing agent-containing layer 32 may be provided on the entire surface between the substrate 31 and the substrate 33. That is, the end surfaces of the substrate 31, the fire-extinguishing agent-containing layer 32, and the substrate 33 may be flush with each other.

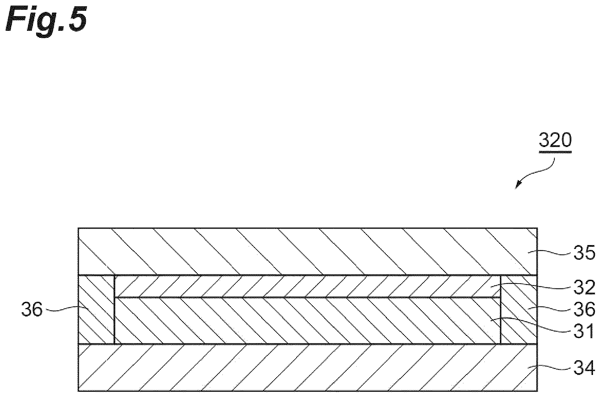

FIG. 5 is a schematic sectional view of another layered product for extinguishing fire according to the third embodiment. A layered product 320 for extinguishing fire includes a substrate 34, a substrate 31, a fire-extinguishing agent-containing layer 32, and a substrate 35, in this order, and includes a sealing portion 36 on the lateral surface of the fire-extinguishing agent-containing layer 32. The substrate 31 and the substrate 35, or the substrate 34 and the substrate 35 can be referred to as a barrier substrate in the layered product 310 for extinguishing fire. Both of the substrates 31 and 34 may be the substrate having water vapor barrier properties.

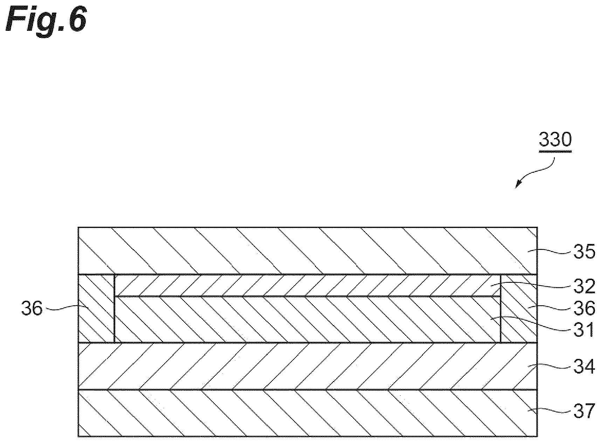

FIG. 6 is a schematic sectional view of another layered product for extinguishing fire according to the third embodiment. A layered product 330 for extinguishing fire includes a pressure-sensitive adhesive layer 37, a substrate 34, a substrate 31, a fire-extinguishing agent-containing layer 32, and a substrate 35, in this order, and includes a sealing portion 36 on the lateral surface of the fire-extinguishing agent-containing layer 32. The substrate 31 and the substrate 35, or the substrate 34 and the substrate 35 can be referred to as a barrier substrate in the layered product 330 for extinguishing fire. Both of the substrates 31 and 34 may be the substrate having water vapor barrier properties.

Since the thickness of the layered product for extinguishing fire varies in accordance with a layer configuration, it is not necessary to limit the thickness, and for example, the thickness can be 0.1 to 20 mm, from the viewpoint of thinning the layered product for extinguishing fire such that an installation space is not limited while maintaining fire-extinguishing performance.

The area of the main surface (a surface when the layered product for extinguishing fire is seen from the top in a vertical direction) of the layered product for extinguishing fire, for example, can be 9 to 620 cm², from the viewpoint of fire-extinguishing performance and handleability. In a case where the layered product for extinguishing fire includes the sealing portion, for example, in sectional view of the layered product for extinguishing fire, the length of the substrate configuring the outermost layer in a direction perpendicular to a layering direction may be longer than the length of the fire-extinguishing agent-containing layer in the same direction by 2 mm or more.

### (Substrate)

As the pair of substrates having water vapor barrier properties, a resin substrate can be selected. Examples of the resin substrate include polyester and the like, from the viewpoint of having a desired water vapor transmission rate and easily suppressing a deterioration in the fire-extinguishing agent. By selecting a material with transparency, it is easy to check the appearance of the layered product for extinguishing fire or a time for replacement.

The water vapor transmission rate (based on JIS K 7129, in the condition of 40°C/90%RH) required for the pair of substrates having water vapor barrier properties is 15 g/m²/day or less, in consideration of using the fire-extinguishing agent component generating the aerosol by the combustion, and may be 10 g/m²/day or less, may be 5 g/m²/day or less, may be 1.5 g/m²/day or less, or may be 1 g/m²/day or less. The lower limit of the water vapor transmission rate is not particularly limited, and for example, can be 0.5 g/m²/day. The water vapor transmission rate of the substrate can be adjusted in accordance with a change in the thickness, a change in the molecular weight, a surface treatment, the formation of a metal oxide layer described below, and the like. In a case where the water vapor barrier properties are insufficient, the layered product for extinguishing fire may be expanded by the deliquescence of the fire-extinguishing agent component, and alkaline water may be leaked. For example, in a case where the layered product for extinguishing fire is installed in an electronic member, there is a concern that a short circuit, corrosion, or the like occurs in the vicinity of an installation spot by alkaline water.

The thickness, the breaking strength, or the like of the pair of substrates having water vapor barrier properties can be suitably selected in accordance with heat quantity and an impact when fire breaks out, an allowable space, and the like. For example, in the case of a thick substrate, water vapor transmission is easily suppressed, a strength or rigidity is obtained, a form with high flatness can be obtained, and handling is facilitated. In addition, in the case of a thin substrate, it is possible to provide the layered product for extinguishing fire in a narrow space. The thickness of the pair of substrates having water vapor barrier properties, for example, can be 4.5 to 1000 µm, and may be 10 to 100 µm, may be 10 to 50 µm, or may be 12 to 20 µm. The thicknesses of the pair of substrates having water vapor barrier properties may be identical to each other or different from each other.

At least one of the pair of substrates having water vapor barrier properties may include a metal oxide layer, from the viewpoint of adjusting the water vapor transmission rate. That is, as at least one of the pair of substrates having water vapor barrier properties, a substrate including the metal oxide layer on the surface may be used. The metal oxide layer may be formed on one surface of the substrate, or may be formed on both surfaces. Examples of the metal oxide layer include a vapor-deposited layer of a metal oxide (an alumina vapor-deposited layer or a silica vapor-deposited layer). It is possible to preferably use the silica vapor-deposited layer, from the viewpoint of corrosion resistance to alkaline water generated by the deliquescence of the fire-extinguishing agent component. The thickness of the metal oxide layer can be 3 to 100 nm, from the viewpoint of the water vapor barrier properties and the cost.

As with the substrate 31 in FIG. 5, examples of a substrate that may not necessarily have water vapor barrier properties include not only a resin substrate but also a metal substrate, a glass cloth, and non-flammable paper. Among them, the resin substrate (for example, a polyester film), the glass cloth, and the non-flammable paper can be used, from the viewpoint of insulating properties or corrosion resistance. The thickness of the substrate that may not have water vapor barrier properties can be 20 to 1000 µm, and may be 25 to 300 µm, from the viewpoint of fire resistance, shape retainability as the substrate, space saving properties, and the like.

### (Fire-Extinguishing Agent-Containing Layer)

The fire-extinguishing agent-containing layer is a layer containing the fire-extinguishing agent component and the binder resin. The fire-extinguishing agent component generates the aerosol by the combustion. The fire-extinguishing agent component, for example, contains at least an inorganic oxidizer and a radical generator. The radical generator has a function of stabilizing combustion radicals to suppress a combustion chain reaction (a negative catalyst function). The fire-extinguishing agent component has deliquescence.

The thickness of the fire-extinguishing agent-containing layer may be suitably set in accordance with an installation location of the layered product for extinguishing fire, and the amount of fire-extinguishing agent component to be blended. It is sufficient that the thickness of the fire-extinguishing agent-containing layer, for example, is 1 mm or less, and the thickness can be 30 to 1000 µm, and may be 150 to 500 µm.

The content rate of the fire-extinguishing agent component of the fire-extinguishing agent-containing layer (based on the mass of the fire-extinguishing agent-containing layer), for example, is 50 to 97% by mass, preferably 60 to 95% by mass, and more preferably 70 to 92% by mass. By setting the content rate of the fire-extinguishing agent component to 50% by mass or more, it is possible to attain excellent fire-extinguishing performance, whereas by setting the content rate to 97% by mass or less, it is possible to attain excellent moldability. The amount of fire-extinguishing agent component per unit area may be set in accordance with a target to be extinguished. For example, it is sufficient that the amount is 25 g/m² or more with respect to low heating power such as a candle. It is sufficient that the amount is 90 g/m² or more with respect to the heating power of 1 g of solid fuel. It is preferable that the amount is 100 g/m² or more with respect to high heating power such as large-scale fire or ignition from a lithium-ion battery.

### [Fire-Extinguishing Agent Component]

As described above, the fire-extinguishing agent-containing layer contains the inorganic oxidizer and the radical generator as the fire-extinguishing agent component. Hereinafter, such components will be described.

The inorganic oxidizer (a component (A)) is a component combusting together with the binder resin to generate heat energy. A specific aspect of the inorganic oxidizer is as described above.

The radical generator (a component (B)) is a component for generating an aerosol (radicals) by heat energy generated by the combustion of the binder resin and the inorganic oxidizer. A specific aspect of the radical generator is as described above.

The content of the component (A) and the content of the component (B) are as described above.

As the fire-extinguishing agent component to be blended in the fire-extinguishing agent-containing layer, a commercially available product may be used. A commercially available fire-extinguishing agent component is as described above.

### [Binder Resin]

A specific aspect of the binder resin is as described above.

The content rate of the binder resin, which is based on the total amount of fire-extinguishing agent-containing layer, is as described above.

### [Other Components]

Examples of other components to be blended in the fire-extinguishing agent-containing layer include a dispersant, a solvent, a colorant, an antioxidant, a flame retardant, an inorganic filler, and a pressure-sensitive adhesive agent. Such components may be suitably selected in accordance with the composition of the fire-extinguishing agent-containing layer, and the type of binder resin. The content rate of the other components in the fire-extinguishing agent-containing layer (based on the mass of the fire-extinguishing agent-containing layer), for example, is 10% by mass or less.

### (Bonding Adhesive Layer)

The layered product for extinguishing fire may further include a bonding adhesive layer. For example, the bonding adhesive layer may be provided between the fire-extinguishing agent-containing layer 32 and the substrate 33 in FIG. 4, and between the substrate 31 and the substrate 34 and/or between the fire-extinguishing agent-containing layer 32 and the substrate 35 in FIG. 5 and FIG. 6. The end surface of the fire-extinguishing agent-containing layer may be flush with the end surface of the bonding adhesive layer, but it is not necessary that both of the end surfaces are flush with each other. In a case where a bonding adhesive agent is used to protrude outside the end surface of the fire-extinguishing agent-containing layer, the protruding bonding adhesive agent is capable of performing bonding adhesion between the substrates to be the outermost layer and exhibiting a function as the sealing portion.

The bonding adhesive layer, for example, can be formed by using a bonding adhesive agent such as an epoxy resin, an acrylic resin, and a urethane resin. Among them, the epoxy resin can be used from the viewpoint of the water vapor barrier properties, and for example, MAXIVE (Product Name, manufactured by MITSUBISHI GAS CHEMICAL COMPANY, INC.) can be used. The epoxy resin, for example, can be used together with an amine-based curing agent.

The thickness of the bonding adhesive layer, for example, can be 1 to 10 µm, and may be 2 to 5 µm.

### (Sealing Portion)

The layered product for extinguishing fire may further include the sealing portion on the lateral surface of the fire-extinguishing agent-containing layer. That is, the layered product for extinguishing fire may include the sealing portion that joins the circumferential edges of the substrates to be the outermost layer in the substrates. By providing the sealing portion, the lateral surface of the fire-extinguishing agent-containing layer is sealed. Accordingly, the fire-extinguishing agent component is not in contact with the air, and it is possible to suppress moisture absorption by the fire-extinguishing agent component.

The sealing portion can be formed by using the bonding adhesive layer described above, or a film (a heat seal material) such as LDPE or LLDPE, which exhibits heat seal properties at a temperature lower than or equal to the heat decomposition temperature of the fire-extinguishing agent component. For example, in FIG. 5, in a case where the bonding adhesion between the substrate 31 and the substrate 34 is performed by using the bonding adhesive agent, the bonding adhesive agent formed on the substrate 34 exists outside the end surface of the fire-extinguishing agent-containing layer 32. In such a state, by curing the bonding adhesive agent, the bonding adhesive layer is formed between the substrate 31 and the substrate 34, and the sealing portion 36 is formed on the lateral surface of the fire-extinguishing agent-containing layer 32. In this case, the sealing portion 36 also serves as the bonding adhesive layer that performs the bonding adhesion between the substrate 34 and the substrate 35.

In addition, in FIG. 5, the heat seal materials are formed on the substrates 34 and 35 such that the heat seal materials face each other to interpose the fire-extinguishing agent-containing layer 32, and in such a state, the end portions of the heat seal materials are heated and pressurized in the layering direction such that the fire-extinguishing agent-containing layer 32 is enclosed with the heat seal materials. In this case, a heat seal portion formed on the end portion of the heat seal material is the sealing portion 36 on the lateral surface of the fire-extinguishing agent-containing layer 32. Note that, the heat seal material may be formed on the substrates 34 and 35 via the bonding adhesive layer described above.

### (Pressure-Sensitive Adhesive Layer)

The layered product for extinguishing fire may further include the pressure-sensitive adhesive layer on the outermost layer. Accordingly, it is possible to install the layered product for extinguishing fire in any location close to a spot with a concern for ignition. A mold release layer for improving the handleability may be formed on the pressure-sensitive adhesive layer. Examples of the mold release layer include silicone-coated PET, and PP-coated paper.

The pressure-sensitive adhesive layer, for example, can be formed by using a pressure-sensitive adhesive agent such as a urethane urea resin and an acrylic resin. Among them, the urethane urea resin can be used from the viewpoint of easy peeling properties. The urethane urea resin, for example, can be used together with a urethane-based curing agent.

### <Production Method for Layered Product for Extinguishing Fire>

As described above, a production method for the layered product for extinguishing fire is not particularly limited, and the layered product for extinguishing fire can be produced by suitably layering each layer described above, and as necessary, performing heat seal or the like.

Note that, a method for forming the fire-extinguishing agent-containing layer 32 onto the substrate 31 includes a step of preparing a coating liquid containing the fire-extinguishing agent component described above and the binder resin described above (a coating liquid preparing step), a step of forming a coated film on the surface of the substrate 31 by using the coating liquid (an applying step), and a step of drying the coated film to form the fire-extinguishing agent-containing layer 32 on the surface of the substrate 31 (a drying step).

In the coating liquid preparing step, an alcohol solvent (for example, ethanol and IPA) can be used as a solvent used in the preparation of the coating liquid. Since the alcohol solvent is excellent in the dispersibility of the fire-extinguishing agent component and has low volatility, the alcohol solvent is suitable for the solvent for preparing the coating liquid. As the solvent, ethyl acetate may be used. An amount ratio of the solvent to the amount of fire-extinguishing agent component and binder resin may be suitably adjusted in accordance with a desired viscosity of the coating liquid.

The applying step may be implemented by wet coating, or may be implemented by impregnating the substrate with the coating liquid.

The drying step, for example, can be implemented by heating the coated film to 50°C to 100°C, from the viewpoint of suppressing the reaction of the fire-extinguishing agent component while sufficiently removing the solvent.

### <Electronic Member>

An electronic member includes the layered product for extinguishing fire described above, and an electronic part. In the layered product for extinguishing fire described above, an expansion due to the moisture absorption is suppressed even in a high-humidity environment. Therefore, even in a case where the layered product for extinguishing fire is incorporated in the electronic member, it is possible to avoid problems caused by the layered product for extinguishing fire.

Specifically, examples of the electronic part include a battery, a cable, and a power conditioner. In addition, specifically, examples of the electronic member include a switchboard, a photovoltaic power and generation device.

### -Outline of Each Embodiment-

[Invention 1] A layered product for extinguishing fire, including:
   a pair of substrates; and
   a fire-extinguishing agent-containing layer between the pair of substrates, the layer containing a fire-extinguishing agent component generating an aerosol by combustion, and a binder resin,
   in which a water vapor transmission rate (in a condition of 40°C/90%RH) of the substrate is 12 g/m²/day or less.
[Invention 2] The layered product for extinguishing fire according to Invention 1,
   in which the fire-extinguishing agent component contains a radical generator including at least one of a potassium salt and a sodium salt.
[Invention 3] The layered product for extinguishing fire according to Invention 1 or 2,
   in which the fire-extinguishing agent component contains at least an inorganic oxidizer combusting together with the binder resin to generate heat energy, and a radical generator, and
   an initial decomposition temperature of the radical generator is in a range of 90°C to 260°C.
[Invention 4] The layered product for extinguishing fire according to Invention 3,
   in which the radical generator is at least one of potassium acetate and tripotassium citrate.
[Invention 5] The layered product for extinguishing fire according to any one of Inventions 1 to 4,
   in which at least one of the pair of substrates includes a metal oxide layer containing alumina or silica.
[Invention 6] The layered product for extinguishing fire according to Invention 5,
   in which the metal oxide layer is directed toward the fire-extinguishing agent-containing layer side.
[Invention 7] The layered product for extinguishing fire according to Invention 5 or 6,
   in which the metal oxide layer is a vapor-deposited layer of a metal oxide.
[Invention 8] The layered product for extinguishing fire according to any one of Inventions 1 to 7, further including
   a sealing portion sealing a lateral surface of the fire-extinguishing agent-containing layer.
[Invention 9] A layered product for extinguishing fire, including:
   a fiber layer containing an organic fiber or an inorganic fiber having a high strength - heat resistance; and
   a resin layer,
   in which at least any one of the fiber layer and the resin layer contains a fire-extinguishing agent component generating an aerosol by combustion.
[Invention 10] The layered product for extinguishing fire according to Invention 9,
   in which the fiber layer contains at least one selected from the group consisting of a carbon fiber, a glass fiber, a metal fiber, and a ceramic fiber.
[Invention 11] The layered product for extinguishing fire according to Invention 9 or 10,
   in which a thickness of the fiber layer is 0.02 to 2.0 mm.
[Invention 12] The layered product for extinguishing fire according to any one of Inventions 9 to 11,
   in which the resin layer contains at least one selected from the group consisting of a urethane resin, an epoxy resin, a silicone resin, a vinyl chloride resin, a polyolefin resin, and a polyester resin.
[Invention 13] A production method for a layered product for extinguishing fire, including:
   a step of impregnating a fiber layer containing an organic fiber or an inorganic fiber having a high strength - heat resistance with a first liquid composition containing a liquid component, and a fire-extinguishing agent component generating an aerosol by combustion;
   a step of drying the impregnated first liquid composition;
   a step of applying a second liquid composition containing a liquid component and a resin onto the fiber layer; and
   a step of drying the applied second liquid composition, or
   a step of applying a third liquid composition containing a liquid component, a fire-extinguishing agent component generating an aerosol by combustion, and a resin onto a fiber layer containing an organic fiber or an inorganic fiber having a high strength - heat resistance; and
   a step of drying the applied third liquid composition, or
   a step of impregnating a fiber layer containing an organic fiber or an inorganic fiber having a high strength - heat resistance with a first liquid composition containing a liquid component, and a fire-extinguishing agent component generating an aerosol by combustion;
   a step of drying the impregnated first liquid composition;
   a step of applying a third liquid composition containing a liquid component, a fire-extinguishing agent component generating an aerosol by combustion, and a resin onto the fiber layer; and
   a step of drying the applied third liquid composition.
[Invention 14] A layered product for extinguishing fire, including:
   a pair of substrates; and
   a fire-extinguishing agent-containing layer between the pair of substrates, the layer containing a fire-extinguishing agent component generating an aerosol by combustion, and a binder resin,
   in which a water vapor transmission rate (based on JIS K 7129, in a condition of 40°C/90%RH) of the substrate is 15 g/m²/day or less.
[Invention 15] The layered product for extinguishing fire according to Invention 14, further including
   a sealing portion on a lateral surface of the fire-extinguishing agent-containing layer.
[Invention 16] The layered product for extinguishing fire according to Invention 14 or 15,
   in which at least one of the pair of substrates includes a metal oxide layer.
[Invention 17] The layered product for extinguishing fire according to any one of Inventions 14 to 16, further including
   a pressure-sensitive adhesive layer on an outermost layer.
[Invention 18] An electronic member, including:
   the layered product for extinguishing fire according to any one of Inventions 14 to 17; and
   an electronic part.

### Examples

The present invention will be described in more detail by Examples described below, but the present invention is not limited to such examples.

### -Test 1 (First Invention)-

### <Preparation of Materials Used>

The following materials were prepared.
· Fire-extinguishing agent component
   Aerosol fire-extinguishing agent (Product name: K-1, manufactured by YAMATO PROTEC CORPORATION)
· Solvent
   Ethanol
· Binder resin
   Epoxy resin (Product name: MAXIVE M-100, manufactured by MITSUBISHI GAS CHEMICAL COMPANY, INC.)
   Amine-based epoxy resin curing agent (Product name: MAXIVE C-93, manufactured by MITSUBISHI GAS CHEMICAL COMPANY, INC.)
· Substrate
   Aluminum substrate (Product name: 1N30-O, a foil manufactured by UACJ Foil Corporation)
   PET substrate (Product name: DIAFOIL, manufactured by Mitsubishi Chemical Corporation)
   GL-AE substrate (manufactured by Toppan Inc.: a PET film including an alumina vapor-deposited layer with a thickness of 12 µm) GL-RD substrate (manufactured by Toppan Inc.: a PET film including an alumina vapor-deposited layer with a thickness of 12 µm)

### <Preparation of Layered Product for Extinguishing Fire>

### (Example 1)

Ethanol was added to the aerosol fire-extinguishing agent to prepare slurry. The binder resin (the epoxy resin and the epoxy resin curing agent) was added to the obtained slurry to prepare a coating liquid. A mixing ratio of the binder resin and the aerosol fire-extinguishing agent was set to a mass ratio of 10 : 90 in the state of the dried coated film (the content rate of the binder resin, which is based on the total amount of fire-extinguishing agent-containing layer, was 10% by mass). The coating liquid described above was applied onto a mold release sheet at 475 g/m² (the mass of the dried coated film per unit area) in a dry state to form a coated film. The coated film was dried at 90°C for 2 minutes to form a fire-extinguishing agent-containing layer with a thickness of 220 µm.

The fire-extinguishing agent-containing layer obtained as described above was cut into 15 mm square and displaced in the center of the aluminum substrate cut into 50 mm square, and the aluminum substrate cut into 50 mm square was further displaced thereon to obtain a layered product. As illustrated in FIG. 2, four lateral surfaces of the obtained layered product were sealed by using an aluminum tape to obtain a layered product for extinguishing fire.

### (Other Examples and Comparative Examples)

A layered product for extinguishing fire was obtained as with Example 1, except that the layer configuration was changed as shown in Table 2. For the GL-AE substrate and the GL-RD substrate, a vapor-deposited layer was displaced toward the fire-extinguishing agent-containing layer side.

### <Various Evaluations>

The water vapor transmission rate (40°C/90%RH) of the substrate was measured in accordance with JIS Z 0208:1976 Cup Method/JIS K 7129B MOCON Method/ISO 15106-5 DELTAPERM (Table 1). Results are shown in Table 2.

**[Table 1]**

| Measurement method |
|---|
| Cup method Other than below JIS Z 0208: 1976 Moisture transmission rate test method (cup method) of moisture-proof packing material |
| MOCON PERMATRAN to power of +2 to -1 JIS K7129B |
| DELTAPERM to power of-2 to -5 ISO15106-5 |

The layered product for extinguishing fire of each example was stored in the environment of 40°C/75%RH for 10 days, and then, an appearance change was observed. Results are shown in Table 2.

Without Appearance Change: the deliquescence of the fire-extinguishing agent-containing layer or the modification of the substrate was not checked.

With Appearance Change: the deliquescence of the fire-extinguishing agent-containing layer or the modification of the substrate (the corrosion of the substrate) was checked.

**[Table 2]**

| | Configuration | | | | | | | Evaluation item | | |
|---|---|---|---|---|---|---|---|---|---|---|
| | Substrate 1 | | Fire-extinguishing agent-containing layer | | Substrate 2 | | Total thickness (µm) | Water vapor transmission rate | | Appearance change |
| | Material | Thickness (µm) | Material | Thickness (µm) | Material | Thickness (µm) | | Substrate 1 (g/m²/day) | Substrate 2 (g/m²/day) | |
| Example 1 | Aluminum | 50 | Fire-extinguishing agent containing potassium salt | 220 | Aluminum | 50 | 320 | < 1 × 10⁻⁵ | < 1 × 10⁻⁵ | Absence |
| Example 2 | Aluminum | 50 | Fire-extinguishing agent containing potassium salt | 220 | GL-AE | 12 | 282 | < 1 × 10⁻⁵ | 9 | Absence |
| Example 3 | Aluminum | 50 | Fire-extinguishing agent containing potassium salt | 220 | GL-RD | 12 | 282 | < 1 × 10⁻⁵ | 0.1~1.0 | Absence |
| Example 4 | GL-AE | 12 | Fire-extinguishing agent containing potassium salt | 220 | GL-AE | 12 | 244 | 9 | 9 | Absence |
| Example 5 | GL-AE | 12 | Fire-extinguishing agent containing potassium salt | 220 | GL-RD | 12 | 244 | 9 | 0.1~1.0 | Absence |
| Example 6 | GL-RD | 12 | Fire-extinguishing agent containing potassium salt | 220 | GL-AE | 12 | 244 | 0.1~1.0 | 9 | Absence |
| Example 7 | GL-RD | 12 | Fire-extinguishing agent containing potassium salt | 220 | GL-RD | 12 | 244 | 0.1~1.0 | 0.1~1.0 | Absence |
| | | | | | | | | | | |
| Comparative Example 1 | Aluminum | 50 | Fire-extinguishing agent containing potassium salt | 220 | PET | 4.5 | 274.5 | < 1 × 10⁻⁵ | 278 | Presence |
| Comparative Example 2 | Aluminum | 50 | Fire-extinguishing agent containing potassium salt | 220 | PET | 50 | 320 | < 1 × 10⁻⁵ | 25 | Presence |
| Comparative Example 3 | Aluminum | 50 | Fire-extinguishing agent containing potassium salt | 220 | PET | 100 | 370 | < 1 × 10⁻⁵ | 12.5 | Presence |
| Comparative Example 4 | PET | 50 | Fire-extinguishing agent containing potassium salt | 220 | PET | 50 | 320 | 25 | 25 | Presence |

It was found that the layered products for extinguishing fire of Examples were excellent in the property stability of the fire-extinguishing agent, and were capable of preventing the occurrence and the spread of the fire.

### ~Test 2 (Second Invention)~

As a fiber layer, materials shown in Table 3 were prepared.

**[Table 3]**

| | Fiber layer (substrate) | Thickness mm | Tensile strength × 10³ N/25 mm | Elastic modulus GPa | Heat resistance temperature (shape maintenance)°C |
|---|---|---|---|---|---|
| Example 2-1 | Carbon fiber Nylon impregnation Orthogonalize two sheets of TP CA143 manufactured by SHINDO Co., Ltd. | 0.10 | MD: 129.6 | 30 | 1200 |
| | | | TD: 127.2 | 32 | |
| Example 2-2 | Glass cloth A335 manufactured by UNITIKA LTD. | 0.25 | MD: 58.9 | 6.5 | 700 |
| | | | TD: 122.4 | 3.0 | |
| Example 2-3 | Stainless steel cloth BM-111 manufactured by belmont. inc. | 0.15 | MD: 197.2 | 197 | 1400 |
| | | | TD: 195.4 | 198 | |
| Example 2-4 | Ceramic cloth Rubylon cloth CP20 manufactured by NICHIAS Corporation | 0.23 | MD: 131.5 | 196 | 1400 |
| | | | TD: 132.0 | 196 | |
| Example 2-5 | Carbon fiber Epoxy impregnation Carbon fiber Tenax DRWF manufactured by Toray Industries, Inc. | 0.10 | MD: 125.9 | 28 | 1200 |
| | | | TD: 124.0 | 30 | |
| Example 2-6 | Glass cloth A335 manufactured by UNITIKA LTD. | 0.25 | MD: 58.9 | 6.5 | 700 |
| | | | TD: 122.4 | 3.0 | |
| Example 2-7 | Stainless steel cloth BM-111 manufactured by belmont. inc. | 0.15 | MD: 397 | 197 | 1400 |
| | | | TD: 388 | 198 | |
| Example 2-8 | Ceramic cloth Rubylon cloth CP20 manufactured by NICHIAS Corporation | 0.23 | MD: 197.2 | 196 | 1400 |
| | | | TD: 195.4 | 196 | |
| Example 2-9 | Carbon fiber Epoxy impregnation Carbon fiber Tenax DRWF manufactured by Toray Industries, Inc. | 0.10 | MD: 125.9 | 28 | 1200 |
| | | | TD: 124.0 | 30 | |
| Example 2-10 | Glass cloth A335 manufactured by UNITIKA LTD. | 0.25 | MD: 5.9 | 6.5 | 700 |
| | | | TD: 12.2 | 3.0 | |
| Example 2-11 | Stainless steel cloth BM-111 manufactured by belmont. inc. | 0.15 | MD: 66.2 | 197 | 1400 |
| | | | TD: 64.7 | 198 | |
| Example 2-12 | Ceramic cloth Rubylon cloth CP20 manufactured by NICHIAS Corporation | 0.23 | MD: 197.2 | 196 | 1400 |
| | | | TD: 195.4 | 196 | |
| Comparative Example 2-1 | PET Lumirror manufactured by Toray Industries, Inc. | 0.05 | MD: 0.58 | 0.58 | 260 |
| | | | TD: 0.24 | 0.24 | |

In Table 3, the tensile strength of each layer was measured on the basis of JIS-R-3420, the elastic modulus was measured on the basis of JIS-R-3414, and the heat resistance temperature was measured on the basis of ISO 15025.

### <Preparation of Layered Product for Extinguishing Fire>

Layered products for extinguishing fire shown in Table 4 were prepared. The details of each example will be described below.

### (Example 2-1)

The slurry of ethanol and an aerosol fire-extinguishing agent K-1, manufactured by YAMATO PROTEC CORPORATION, and a binder resin (K468HP92 Black, manufactured by TOYO INK CO., LTD., an epoxy resin) were mixed at a solid content mass ratio of Binder Resin : Fire-Extinguishing Agent = 10 : 90 to prepare a liquid composition. The liquid composition was applied to the fiber layer shown in Table 3 to form a coated film. The coated film was dried at 90°C for 4 minutes to form a resin layer (a decorative layer) with a thickness of 200 µm on the fiber layer. Accordingly, a layered product for extinguishing fire was obtained.

### (Examples 2-2 to 2-4)

Layered products for extinguishing fire were obtained as with Example 2-1, except that the fiber layers were as shown in Table 3.

### (Example 2-5)

The slurry of ethanol and an aerosol fire-extinguishing agent K-1, manufactured by YAMATO PROTEC CORPORATION, and a binder resin (K468HP92 Black, manufactured by TOYO INK CO., LTD., an epoxy resin) were mixed at a solid content mass ratio of Binder Resin : Fire-Extinguishing Agent = 30 : 70 to prepare a liquid composition. The fiber layer shown in Table 3 was impregnated with the liquid composition. The fiber layer was dried at 90°C for 4 minutes to obtain a fiber layer supporting the fire-extinguishing agent component. The amount of fire-extinguishing agent component was 50% by mass with respect to the total amount of fiber layer.

Next, a binder resin (K468HP92 Black, manufactured by TOYO INK CO., LTD., an epoxy resin) was added to ethanol to prepare a liquid composition. The liquid composition was applied to the fiber layer supporting the fire-extinguishing agent component to form a coated film. The coated film was dried at 90°C for 4 minutes to form a function layer (a decorative layer) with a thickness of 200 µm on the fiber layer. Accordingly, a layered product for extinguishing fire was obtained.

### (Examples 2-6 to 2-8)

Layered products for extinguishing fire were obtained as with Example 2-5, except that the fiber layer, the binder resin, and the amount of fire-extinguishing agent component with respect to the total amount of fiber layer were as shown in Table 3 and Table 4.

### (Example 2-9)

A fiber layer supporting the fire-extinguishing agent component was obtained as with Example 2-5. As with Example 2-1, a resin layer (a decorative layer) with a thickness of 200 µm was formed on the fiber layer. Accordingly, a layered product for extinguishing fire was obtained.

### (Examples 2-10 to 2-12)

Layered products for extinguishing fire were obtained as with Example 2-9, except that the fiber layer, the binder resin, and the amount of fire-extinguishing agent component with respect to the total amount of fiber layer were as shown in Table 3 and Table 4.

### (Comparative Example 2-1)

A binder resin (K468HP92 Black, manufactured by TOYO INK CO., LTD., an epoxy resin) was added to ethanol to prepare a liquid composition. The liquid composition was applied to the substrate shown in Table 3 to form a coated film. The coated film was dried at 90°C for 4 minutes to form a function layer (a decorative layer) with a thickness of 200 µm on the substrate. Accordingly, a layered product was obtained.

**[Table 4]**

| | Fiber layer | | | | | Resin layer | | | |
|---|---|---|---|---|---|---|---|---|---|
| | Fiber layer (substrate) | Fire-extinguishing agent | Binder resin | Binder ratio (% by mass) | Amount of fire-extinguishing agent component/total amount of fiber layer (% by mass) | Resin (binder resin) | Fire-extinguishing agent | Blended amount of fire-extinguishing agent (% by mass) | Thickness (µm) |
| Example 2-1 | Carbon fiber Nylon impregnation Orthogonalize two sheets | - | - | . | - | K468HP92 Black | K-1 | 90 | 200 |
| Example 2-2 | Glass cloth | - | - | - | - | K468HP92 Black | K-1 | 90 | 200 |
| Example 2-3 | Stainless steel cloth | - | - | - | - | K468HP92 Black | K-1 | 90 | 200 |
| Example 2-4 | Ceramic cloth | - | - | - | - | K468HP92 Black | K-1 | 90 | 200 |
| Example 2-5 | Carbon fiber woven fabric DRWF | K-1 | K468HP92 Black | 30 | 50 | K468HP92 Black | - | - | 200 |
| Example 2-6 | Glass cloth | K-1 | K468HP92 Black | 30 | 65 | K468HP92 Black | - | - | 200 |
| Example 2-7 | Stainless steel cloth | K-1 | K468HP92 Black | 30 | 65 | K468HP92 Black | - | - | 200 |
| Example 2-8 | Ceramic cloth | K-1 | K468HP92 Black | 30 | 65 | K468HP92 Black | - | - | 200 |
| Example 2-9 | Carbon fiber woven fabric DRWF | K-1 | K468HP92 Black | 30 | 50 | K468HP92 Black | K-1 | 90 | 200 |
| Example 2-10 | Glass cloth | K-1 | K468HP92 Black | 30 | 65 | K468HP92 Black | K-1 | 90 | 200 |
| Example 2-11 | Stainless steel cloth | K-1 | K468HP92 Black | 30 | 65 | K468HP92 Black | K-1 | 90 | 200 |
| Example 2-12 | Ceramic cloth | K-1 | K468HP92 Black | 30 | 65 | K468HP92 Black | K-1 | 90 | 200 |
| Comparative Example 2-1 | PET | - | - | - | - | K468HP92 Black | - | - | 200 |

### <Test for Extinguishing Combustive Falling Ball>

The layered product for extinguishing fire obtained in each example was cut out into 70 mm × 120 mm square to be a test sample.

The sample described above was fixed between two SOP type flanges with a nominal pressure of 5K and nominal diameters A32 and Bl 1/4, based on JIS B 2238-1996, such that the center of the sample was coincident with the center of the flange with a bolt and a nut.

A stainless steel support pipe with an outer diameter of φ32 mm, an inner diameter of φ28, and a length of 1 m was installed to be perpendicular to the upper portion of the sample surface.

After the ignition of 1 g of a candle or solid fuel, the tip of the flame was applied to the lower surface of the sample at a flange opening portion, and then, within 3 to 5 seconds, an iron ball with a diameter of 20 mm and a weight of 33 g was dropped onto the upper surface of the sample through the support pipe. The energy of the falling ball was estimated as 0.32 N·m.

As described above, the fire-extinguishing properties and the impact resistance of the sample were evaluated. Evaluation criteria were as follows. Results are shown in Table 5.

Fire-extinguishing properties: a case where the fire was capable of being extinguished within 5 seconds after the sample was brought into contact with the flame was evaluated as A, a case where the fire was capable of being extinguished in more than 5 seconds after the sample was brought into contact with the flame was evaluated as B, and a case where the fire was not capable of being extinguished was evaluated as C.

Impact resistance: a case where the shape was maintained was evaluated as A, and a case where the shape was not maintained was evaluated as B.

**[Table 5]**

| | Candle | | Solid fuel | |
|---|---|---|---|---|
| | Fire-extinguishing properties | Impact resistance | Fire-extinguishing properties | Impact resistance |
| Example 2-1 | A | A | B | A |
| Example 2-2 | A | A | B | A |
| Example 2-3 | A | A | B | A |
| Example 2-4 | A | A | B | A |
| Example 2-5 | A | A | B | A |
| Example 2-6 | A | A | B | A |
| Example 2-7 | A | A | B | A |
| Example 2-8 | A | A | B | A |
| Example 2-9 | A | A | A | A |
| Example 2-10 | A | A | A | A |
| Example 2-11 | A | A | A | A |
| Example 2-12 | A | A | A | A |
| Comparative Example 2-1 | C | B | C | B |

### ∼Test 3 (Third Invention)∼

### <Preparation of Layered Product for Extinguishing Fire>

### (Example 3-1)

Ethanol was added to an aerosol fire-extinguishing agent K-1, manufactured by YAMATO PROTEC CORPORATION, to prepare slurry. The obtained slurry and a binder resin (a polyepoxy resin MAXIVE M-100 and a polyamine resin curing agent C-93, manufactured by MITSUBISHI GAS CHEMICAL COMPANY, INC.) were mixed at a dried mass ratio of Binder : Fire-Extinguishing Agent = 10 : 90 to prepare a coating liquid, and the coating liquid was applied onto a PET film (Substrate A: S10, a thickness of 50 µm), manufactured by Toray Industries, Inc., at 235 g/m² in a dry state to form a coated film. The coated film was dried at 90°C for 4 minutes to form a fire-extinguishing agent-containing layer with a thickness of 200 µm on the PET film.

In a PET film (Substrate B: a thickness of 12 µm) having a vapor-deposited layer containing silica as a main component (a silica vapor-deposited layer, a thickness of 50 nm) on one surface, a bonding adhesive agent (a polyepoxy resin MAXIVE M-100 and a polyamine resin curing agent C-93, manufactured by MITSUBISHI GAS CHEMICAL COMPANY, INC.) was applied to the silica vapor-deposited layer side and was dried (at 90°C for 1 minute) to form a bonding adhesive layer with a thickness of 5 µm.

By bonding the fire-extinguishing agent-containing layer on the substrate A and the bonding adhesive layer on the substrate B to face each other, a layered product for extinguishing fire was obtained.

### (Example 3-2)

As with Example 3-1, a fire-extinguishing agent-containing layer with a thickness of 200 µm was formed on a PET film that is the substrate A.

Square substrates C and D, which were longer than the substrate A in both of the length and the width by 20 mm, were prepared. The substrates C and D are a PET film (a thickness 12 µm) having a vapor-deposited layer (a silica vapor-deposited layer, a thickness of 50 nm) containing silica as a main component on one surface. Among them, on the silica vapor-deposited layer side of the substrate C, a bonding adhesive layer with a thickness of 5 µm was formed, as with Example 3-1.

By layering and bonding the substrate A and the bonding adhesive layer on the substrate C to face each other, and the fire-extinguishing agent-containing layer on the substrate A and the silica vapor-deposited layer of the substrate D to face each other, a layered product for extinguishing fire was obtained. In this case, the position was adjusted such that the substrate A was displaced in the center of the substrates C and D. In this example, the bonding adhesive layer was formed between the substrate A and the substrate C, and a sealing portion was formed on the lateral surface of the substrate A and the fire-extinguishing agent-containing layer by a cured product of a bonding adhesive agent component configuring the bonding adhesive layer.

### (Example 3-3)

A layered product for extinguishing fire was obtained as with Example 3-2, except that substrates C' and D' obtained by replacing the silica vapor-deposited layer of the substrates C and D with a vapor-deposited layer containing alumina as a main component (an alumina vapor-deposited layer, a thickness of 50 nm) were used.

### (Example 3-4)

By layering and bonding the fire-extinguishing agent-containing layer on the substrate A and the bonding adhesive layer on the substrate C to face each other, and the substrate A and the silica vapor-deposited layer of the substrate D to face each other, a layered product for extinguishing fire was obtained. In this example, the bonding adhesive layer was formed between the fire-extinguishing agent-containing layer on the substrate A and the substrate C, and a sealing portion was formed on the lateral surface of the substrate A and the fire-extinguishing agent-containing layer by a cured product of a bonding adhesive agent component configuring the bonding adhesive layer.

### (Example 3-5)

As with Example 3-1, a fire-extinguishing agent-containing layer with a thickness of 200 µm was formed on a PET film that is the substrate A.

As with Example 3-1, a bonding adhesive layer with a thickness of 5 µm was formed on the silica vapor-deposited layer side of the substrates C and D.

By layering and bonding the substrate A and the bonding adhesive layer on the substrate C to face each other, and the fire-extinguishing agent-containing layer on the substrate A and the bonding adhesive layer on the substrate D to face each other, a layered product for extinguishing fire was obtained. In this example, the bonding adhesive layer was formed between the substrate A and the substrate C and between the fire-extinguishing agent-containing layer on the substrate A and the substrate D, and a sealing portion was formed on the lateral surface of the substrate A and the fire-extinguishing agent-containing layer by a cured product of a bonding adhesive agent component configuring the bonding adhesive layer.

### (Example 3-6)

As with Example 3-1, a fire-extinguishing agent-containing layer with a thickness of 200 µm was formed on a PET film that is the substrate A.

As with Example 3-1, a bonding adhesive layer with a thickness of 5 µm was formed on the silica vapor-deposited layer side of the substrates C and D. Further, each bonding adhesive layer and a corona-treated surface side of a LLDPE film (MC-S, a heat seal material, a thickness of 30 µm), manufactured by Mitsui Chemicals Tohcello, Inc., were bonded.

By layering the substrate A and the LLDPE film on the substrate C to face each other, and the fire-extinguishing agent-containing layer on the substrate A and the LLDPE film on the substrate D to face each other, and performing a heat seal treatment with a heat roll heated to 120°C, a layered product for extinguishing fire was obtained. In this example, the entire substrate A and fire-extinguishing agent-containing layer was sealed with a heat seal material. A sealing portion was formed on the lateral surface of the substrate A and the fire-extinguishing agent-containing layer by heat fusion between the heat seal materials.

### (Example 3-7)

As with Example 3-6, the substrate A and the LLDPE film on the substrate C were layered to face each other, and the fire-extinguishing agent-containing layer on the substrate A and the LLDPE film on the substrate D were layered to face each other.

A pressure-sensitive adhesive agent (a urethane urea-based base resin SP-205 and a urethane-based curing agent T-501B, manufactured by TOYOCHEM CO., LTD.) was applied to the substrate C side and dried to form a pressure-sensitive adhesive layer with a thickness of 15 µm. Further, a silicone-coated surface of silicone-coated PET (Cerapeel, a mold release layer, a thickness of 75 µm), manufactured by TORAY ADVANCED FILM Co., Ltd., was bonded onto the pressure-sensitive adhesive layer.

As with Example 3-6, by performing a heat seal treatment with respect to the obtained layered product, a layered product for extinguishing fire with a pressure-sensitive adhesive layer was obtained.

### (Comparative Example 3-1)

A layered product for extinguishing fire with a pressure-sensitive adhesive layer was obtained as with Example 3-7, except that the silica vapor-deposited layer was not provided in the substrates C and D.

### <Various Evaluations>

### (Water Vapor Transmission Rate)

The water vapor transmission rate of the substrate used in each example was measured in the condition of 40°C/90%RH, on the basis of JIS K 7129. Results are shown in Table 6.

**[Table 6]**

| Substrate | Water vapor transmission rate (g/m²/day) |
|---|---|
| A | 15 |
| B | 0.5 |
| C | 0.5 |
| C' | 0.6 |
| C (without vapor-deposited layer) | 63 |
| D | 0.5 |
| D' | 0.6 |
| D (without vapor-deposited layer) | 63 |

### (Fire-Extinguishing Properties)

The fire-extinguishing properties (the initial fire extinguishment properties) of the fire-extinguishing agent-containing layer were evaluated. A rectangular parallelepiped SUS container with a height of 139 mm, a width of 109 mm, and a depth of 36 mm as the inside dimension was prepared in which three circular holes with a diameter of 18 mm were formed on each of two lateral surfaces including the height and the depth. 1.5 g of a paraffin-containing compressed wood piece (manufactured by CAPTAINSTAG Co. Ltd., solid fuel and a fire block igniter) was placed in the center of the bottom portion, and the layered product for extinguishing fire was pasted to the inner lateral surface of the container including the height and the width such that the lower end of the layered product for extinguishing fire was at a position 40 mm from the bottom. In this case, the layered product for extinguishing fire was pasted such that the side of the substrate A of the layered product for extinguishing fire on which the fire-extinguishing agent-containing layer was provided (a layer side shown on the right side in Substrate configuration of Table 7) faced the paraffin-containing compressed wood piece. The layered product not including the pressure-sensitive adhesive layer was pasted by forming the pressure-sensitive adhesive layer. When the paraffin-containing compressed wood piece was ignited, it was checked whether the layered product for extinguishing fire is capable of extinguishing the fire within 10 seconds after the reaction.

### (Expansion)

A high-temperature and high-humidity environment test was performed with respect to the layered product for extinguishing fire obtained in each example. Specifically, the layered product for extinguishing fire was left to stand in the environment of 80°C and 85%RH for 168 hours. After that, the thickness of the center portion of the layered product for extinguishing fire (the maximum thickness in a layering direction) was measured with a vernier caliper, and was compared with the thickness before the test. Results are shown in Table 7.
OK: a thickness increase amount was less than 500 µm.
NG: a thickness increase amount was 500 µm or more.

**[Table 7]**

| | Substrate configuration | | Evaluation item | |
|---|---|---|---|---|
| | | | Fire-extinguishing properties | Expansion |
| Example 3-1 | FIG. 4 | Substrate A/Fire-extinguishing layer/Substrate B | OK | OK |
| Example 3-2 | FIG. 5 | Substrate C/Substrate A/Fire-extinguishing layer/Substrate D | OK | OK |
| Example 3-3 | FIG. 5 | Substrate C'/Substrate A/Fire-extinguishing layer/Substrate D' | OK | OK |
| Example 3-4 | FIG. 5 | Substrate D/Substrate A/Fire-extinguishing layer/Substrate C | OK | OK |
| Example 3-5 | FIG. 5 | Substrate C/Substrate A/Fire-extinguishing layer/Substrate D | OK | OK |
| Example 3-6 | FIG. 5 | Substrate C/Substrate A/Fire-extinguishing layer/Substrate D | OK | OK |
| Example 3-7 | FIG. 6 | Pressure-sensitive adhesive layer/Substrate C/Substrate A/Fire-extinguishing layer/Substrate D | OK | OK |
| Comparative Example 3-1 | FIG. 6 | Pressure-sensitive adhesive layer/Substrate C (without vapor-deposited layer)/Substrate A/Fire-extinguishing layer/Substrate D (without vapor-deposited layer) | OK | NG |

As described above, according to the layered products for extinguishing fire including a pair of barrier substrates of Examples, it was possible to suppress the expansion in the layering direction to less than 500 µm even after the layered product for extinguishing fire was left to stand in a high-temperature and high-humidity environment.

In addition, in the layered products including the sealing portion formed on the lateral surface of the fire-extinguishing agent-containing layer of Examples 3-2 to 3-7 and Comparative Example 3-1, it was not possible to visually check water droplets on the lateral surface of the layered product even after the layered product was left to stand in the environment of 80°C and 85%RH for 168 hours.

In the layered products using the silica vapor-deposited layer as a metal oxide layer of Examples 3-2 and 3-4 to 3-7, no change was checked on the appearance (the swelling of the fire-extinguishing agent-containing layer, and the like) even after the layered product was left to stand in the environment of 80°C and 85%RH for 168 hours.

The layered products provided with the pressure-sensitive adhesive layer of Example 3-7 and Comparative Example 3-1 were capable of being pasted to the SUS target with excellent construction properties.

### Industrial Applicability

The layered product for extinguishing fire of the present invention can be particularly preferably used for a member that can be used in industrial materials such as a building material, an automobile member, an aircraft member, and an electronic member.

### Reference Signs List

1, 3: substrate, 2: fire-extinguishing agent-containing layer, 4: sealing portion, 10, 20: layered product for extinguishing fire, 21: fiber layer, 22: resin layer, 210: layered product for extinguishing fire, 31, 33, 34, 35: substrate, 32: fire-extinguishing agent-containing layer, 36: sealing portion, 37: pressure-sensitive adhesive layer, 310, 320, 330: layered product for extinguishing fire.

## Claims

1. A layered product for extinguishing fire, comprising:
a pair of substrates; and
a fire-extinguishing agent-containing layer between the pair of substrates, the layer containing a fire-extinguishing agent component generating an aerosol by combustion, and a binder resin,
wherein a water vapor transmission rate (in a condition of 40°C/90%RH) of the substrate is 12 g/m²/day or less.

2. The layered product for extinguishing fire according to claim 1,
wherein the fire-extinguishing agent component contains a radical generator including at least one of a potassium salt and a sodium salt.

3. The layered product for extinguishing fire according to claim 1 or 2,
wherein the fire-extinguishing agent component contains at least an inorganic oxidizer combusting together with the binder resin to generate heat energy, and a radical generator, and
an initial decomposition temperature of the radical generator is in a range of 90°C to 260°C.

4. The layered product for extinguishing fire according to claim 3,
wherein the radical generator is at least one of potassium acetate and tripotassium citrate.

5. The layered product for extinguishing fire according to claim 1 or 2,
wherein at least one of the pair of substrates includes a metal oxide layer containing alumina or silica.

6. The layered product for extinguishing fire according to claim 5,
wherein the metal oxide layer is directed toward the fire-extinguishing agent-containing layer side.

7. The layered product for extinguishing fire according to claim 5,
wherein the metal oxide layer is a vapor-deposited layer of a metal oxide.

8. The layered product for extinguishing fire according to claim 1 or 2, further comprising
a sealing portion sealing a lateral surface of the fire-extinguishing agent-containing layer.

9. A layered product for extinguishing fire, comprising:
a fiber layer containing an organic fiber or an inorganic fiber having a high strength-heat resistance; and
a resin layer,
wherein at least any one of the fiber layer and the resin layer contains a fire-extinguishing agent component generating an aerosol by combustion.

10. The layered product for extinguishing fire according to claim 9,
wherein the fiber layer contains at least one selected from the group consisting of a carbon fiber, a glass fiber, a metal fiber, and a ceramic fiber.

11. The layered product for extinguishing fire according to claim 9 or 10,
wherein a thickness of the fiber layer is 0.02 to 2.0 mm.

12. The layered product for extinguishing fire according to claim 9 or 10,
wherein the resin layer contains at least one selected from the group consisting of a urethane resin, an epoxy resin, a silicone resin, a vinyl chloride resin, a polyolefin resin, and a polyester resin.

13. A production method for a layered product for extinguishing fire, comprising:
a step of impregnating a fiber layer containing an organic fiber or an inorganic fiber having a high strength-heat resistance with a first liquid composition containing a liquid component, and a fire-extinguishing agent component generating an aerosol by combustion;
a step of drying the impregnated first liquid composition;
a step of applying a second liquid composition containing a liquid component and a resin onto the fiber layer; and
a step of drying the applied second liquid composition, or
a step of applying a third liquid composition containing a liquid component, a fire-extinguishing agent component generating an aerosol by combustion, and a resin onto a fiber layer containing an organic fiber or an inorganic fiber having a high strength-heat resistance; and
a step of drying the applied third liquid composition, or
a step of impregnating a fiber layer containing an organic fiber or an inorganic fiber having a high strength-heat resistance with a first liquid composition containing a liquid component, and a fire-extinguishing agent component generating an aerosol by combustion;
a step of drying the impregnated first liquid composition;
a step of applying a third liquid composition containing a liquid component, a fire-extinguishing agent component generating an aerosol by combustion, and a resin onto the fiber layer; and
a step of drying the applied third liquid composition.

14. A layered product for extinguishing fire, comprising:
a pair of substrates; and
a fire-extinguishing agent-containing layer between the pair of substrates, the layer containing a fire-extinguishing agent component generating an aerosol by combustion, and a binder resin,
wherein a water vapor transmission rate (based on JIS K 7129, in a condition of 40°C/90%RH) of the substrate is 15 g/m²/day or less.

15. The layered product for extinguishing fire according to claim 14, further comprising
a sealing portion on a lateral surface of the fire-extinguishing agent-containing layer.

16. The layered product for extinguishing fire according to claim 14 or 15,
wherein at least one of the pair of substrates includes a metal oxide layer.

17. The layered product for extinguishing fire according to claim 14 or 15, further comprising
a pressure-sensitive adhesive layer on an outermost layer.

18. An electronic member, comprising:
the layered product for extinguishing fire according to claim 14 or 15; and
an electronic part.
